## Europäisches Patentamt
## European Patent Office
## Office européen des brevets

(19)

(11) Veröffentlichungsnummer: **0 270 521**
**A2**

(12) # EUROPÄISCHE PATENTANMELDUNG

(21) Anmeldenummer: 87890277.4

(22) Anmeldetag: 03.12.87

(51) Int. Cl.⁴: **B 23 Q 5/38**
**F 16 H 1/20**

(30) Priorität: 04.12.86 AT 3234/86

(43) Veröffentlichungstag der Anmeldung:
08.06.88 Patentblatt 88/23

(84) Benannte Vertragsstaaten: **CH DE GB IT LI**

(71) Anmelder: **MASCHINENFABRIK HEID
AKTIENGESELLSCHAFT
Ernstbrunner Strasse 31-33
A-2000 Stockerau (AT)**

(72) Erfinder: **Holy, Franz
Dr. Adolf Schärfstrasse 3
A-2000 Stockerau (AT)**

(74) Vertreter: **Müllner, Erwin, Dr. et al
Patentanwälte Dr. Erwin Müllner Dipl.-Ing. Werner
Katschinka Postfach 159 Weihburggasse 9
A-1014 Wien (AT)**

(54) **Vorrichtung zur kontinuierlichen Übertragung von Drehmomenten zwischen zwei Wellen von zwei relativ zueinander bewegbaren Maschinenteilen.**

(57) Eine Vorrichtung zur kontinuierlichen Übertragung von Drehmomenten zwischen zwei im Achsabstand zueinander veränderbaren Wellen (1, 5; 13, 14; 17, 22) von zwei relativ zueinander bewegbaren Maschinenteilen, beispielsweise zwischen zwei Schlitten einer Werkzeugmaschine, umfaßt mindestens zwei Schwingen (2, 3; 10, 11, 12; 18, 21), die mittels einer Achse (4, 19) frei drehbar miteinander verbunden sind. Auf der Achse sitzt ein Zahnrad (7, 20), das in ein weiteres (6, 8) auf jeder der beiden Schwingen (2, 3; 10, 11, 12; 18, 21) eingreift. Es können auch mehrere ineinandergreifende Zahnräder auf jeder Schwinge hintereinander geschaltet sein (Fig. 4). Das äußerste der Zahnräder der einen Schwinge (2, 10, 18) ist mit der antreibenden Welle (1, 13, 17) auf dem einen Maschinenteil, beispielsweise einem Bettschlitten, und das äußerste der anderen Schwinge (3, 12, 21) mit der abtreibenden Welle (5, 14, 22), beispielsweise auf einem Planschlitten, verbunden. Die Schwingen selbst können als gelenkig und gegebenenfalls öldicht aneinanderschließende Zahnrad-Gehäuseteile ausgebildet sein. Die Schwingen bilden eine Kette, die der Relativbewegung der Schlitten einer Werkzeugmaschine folgt.

Fig. 2

EP 0 270 521 A2

**Beschreibung**

Vorrichtung zur kontinuierlichen Übertragung von Drehmomenten zwischen zwei Wellen von zwei relativ zueinander bewegbaren Maschinenteilen

Die Erfindung betrifft eine Vorrichtung zur kontinuierlichen Übertragung von Drehmomenten zwischen zwei Wellen von zwei relativ zueinander bewegbaren Maschinenteilen, beispielsweise zwischen einer antreibenden und einer abtreibenden Welle, die auf zwei verschiedenen, relativ gegeneinander verfahrbaren Schlitten einer Werkzeugmaschine, wie auf dem Bettschlitten einerseits und auf dem Planschlitten anderseits, gelagert sind. Bei Bearbeitungszentren ist es vielfach aus Gewichts- und Platzgründen nicht möglich, einen Antrieb für rotierende Werkzeuge, wie etwa Fräser, unmittelbar dem Werkzeugschlitten zuzuordnen, der das Werkzeug trägt. Es wird beispielsweise der Fräserantrieb auf den Bettschlitten verlegt und das Werkzeug über Kegelradgetriebe in Verbindung mit einer Schiebewelle angetrieben. Die Konstruktin ist äußerst aufwendig und die Relativbewegung in der Schiebewelle kann unter Last nur durch Einführung besonders reibungsvermindernder Maßnahmen erfolgen.

Zur Übertragung eines Drehmomentes zwischen zwei Wellen, die sich relative zueinander bewegen, sind ferner homokinetische Gelenke (Kreuzgelenke) bekannt, die an den Enden einer Schiebewelle angeordnet sind. Eine Momentenübertragung etwa über einen Winkel von 45° zu jedem der beiden Wellenstummel zur Schieberrolle ist nicht möglich. Ferner sind Roboterarme bekannt, die aus Gliedern bestehen, wobei ein auf einer Achse drehbares Zahnrad eines Gliedes in eine Bogenverzahnung einer Wange des benachbarten Gliedes eingreift. Es kann so die Winkelstellung der Glieder zueinander verstellt werden, sodaß der Roboterarm eine Zwangsbewegung ausführt.

Die Erfindung zielt darauf ab, eine Momentenübertragung ohne Winkelfehler bei gutem Wirkungsgrad zu ermöglichen. Dies wird erfindungsgemäß dadurch erreicht, daß mindestens zwei an sich bekannte Schwingen vorgesehen sind, die, wie bekannt, mittels mindestens einer Achse frei drehbar miteinander verbunden sind, daß auf der Achse ein Stirnrad sitzt, das in ein weiteres auf jeder Schwinge und bezüglich dieser frei drehbar gelagertes Stirnrad, an das gegebenenfalls weitere Stirnräder anschließen, eingreift, und daß das eine jener beiden Stirnräder, die von der gelenkigen Verbindung der Schwingen am entferntesten liegen, mit der antreibenden und das andere mit der abtreibenden Welle jeweils eines der zueinander bewegbaren Maschinenteile verbindbar ist. Es ergibt sich ein in der Ebene der Zahnräder dem variablen Abstand zwischen zwei relativ zueinander bewegbaren Maschinenteilen, wie etwa Bettschlitten und Planschlitten einer Werkzeugmaschine, selbständig folgendes Getriebe, das einfach in der Herstellung ist und einen guten Wirkungsgrad bei Ausschaltung jedweden Winkelfehlers aufweist. Als Schwingen, die frei drehbar miteinander verbunden sind, können gabelförmige Tragstücke für die Zahnräder verwendet werden, an deren Schenkelenden die Schenkelenden jeweils eines weiteren gabelförmigen Tragstükkes mit einer gelenkigen Verbindung anschließen. Diese Kette von aneinanderschließenden, frei drehbaren Schwingen mit den in Eingriff stehenden Zahnrädern erlaubt die Übertragung von Dremomenten etwa zwischen Bettschlitten und Planschlitten auch dann, wenn die genannten Schlitten in Bewegung sind, also auch während einer Vorschub- oder Zustellbewegung. Besonders zweckmäßig ist es, wenn die Schwingen als Zahnradgehäuse ausgebildet sind, die gelenkig und gegebenenfalls öldicht aneinanderschließen. Dadurch ist eine Kapselung dergesamten Vorrichtung möglich, die im Hinblick auf den Spänefall etwa bei Werkzeugmaschinen unumgänglich ist. Es ist ferner vorteilhaft, wenn die Zahnradgehäuse unmittelbar auf der antreibenden bzw. der abtreibenden Welle drehbar gelagert sind. Dies ist die einfachste aber dennoch wirkungsvolle Art der Lagerung der die Funktion der Schwingen ausübenden Zahnradgehäuse. Besonders vorteilhaft ist es aber, wenn die Zahnradgehäuse konzentrisch zur antreibenden bzw. abtreibenden Welle gelagert sind. Es ist dann die Zwischenschaltung von Wälzlagern, die auf der Welle sitzen und die Rotation zusätzlich zur Gehäuseverdrehung mitmachne, nicht notwendig. Eine Drehlagerung besteht im letztgenannten Fall erfindungsgemäß etwa zwischen einem Teil der Werkzeugmaschine und unmittelbar des Zahnradgehäuses, in das die Antriebwelle oder Abtreibswelle konzentrisch hineinragt, ohne mit dem Zahnradgehäuse in Verbindung zu stehen.

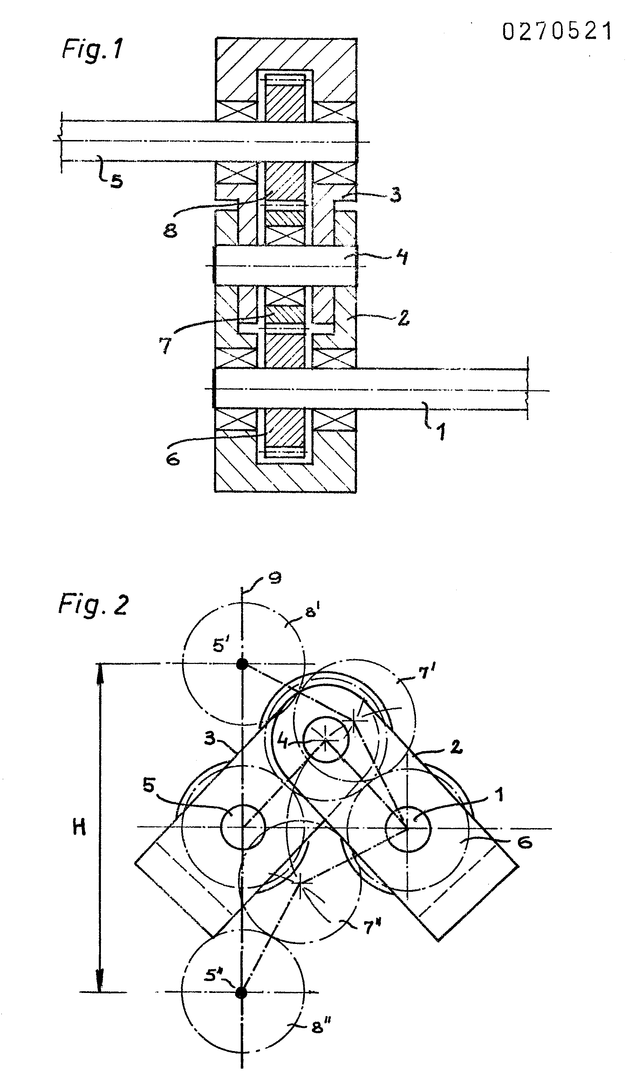

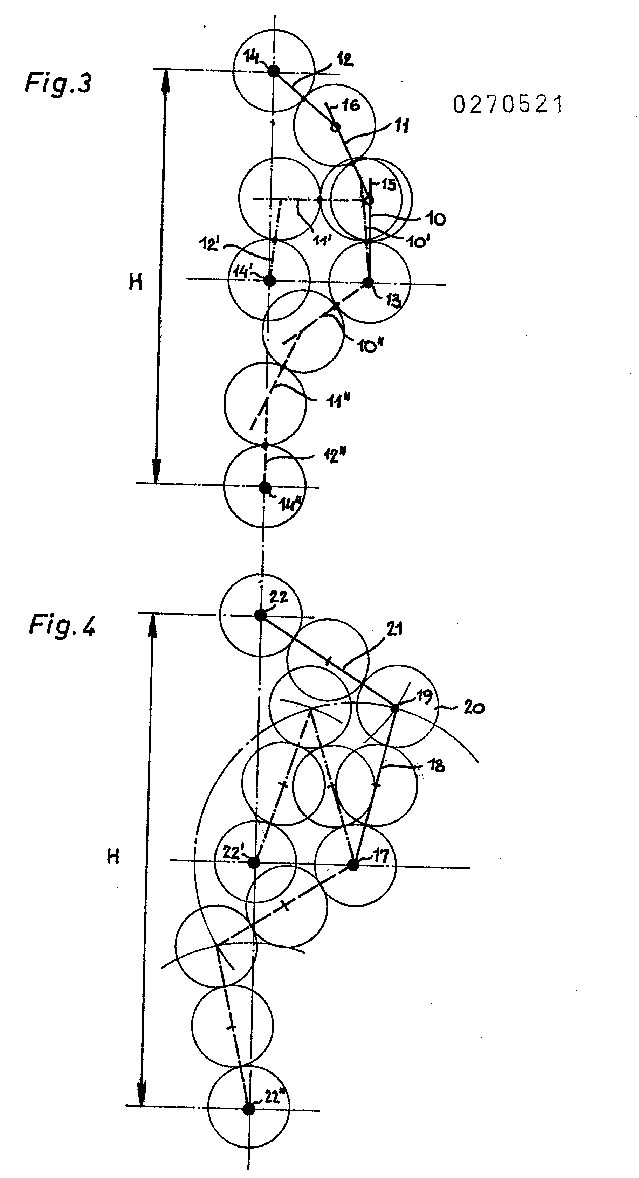

Ausführungsbeispiele des Erfindungsgegenstandes sind in den Zeichnungen schematisch dargestellt. Fig. 1 zeigt einen Querschnitt durch eine Vorrichtung gemäß der Erfindung, Fig. 2 eine Seitenansicht, wobei die beiden Grenzstellungen schematisch angedeutet sind, Fig. 3 eine alternative Ausführungsform der Erfindung in Prinzipdarstellung und Fig. 4 eine andere Alternativausbildung, ebenfalls in Prinzipdarstellung. Gemäß Fig. 1 sitzt auf einer Antriebswelle 1 ein auf Wälzlagern gelagertes, einseitig offenes Zahnradgehäuse 2, an das ein zweites, ebenso ausgebildetes Zahnradgehäuse 3 mittels einer Achse 4 gelenkig anschließt. Das Zahnradgehäuse 3 ist über Wälzlager auf einer abtreibenden Welle 5 drehbar gelagert. Die Wellen 1 und 5 sind relativ zueinander beweglich. Auf der Antriebswelle 1 sitzt ein Zahnrad 6, das in ein Zahnrad 7 auf der Achse 4 eingreift. Letzteres Zahnrad 7 greift seinerseits in ein Zahnrad 8, das auf der abtreibenden Welle 5 aufgekeilt ist.

Durch Veränderung des Achsabstandes der beiden Wellen 1 und 5 ändert sich die Winkelstellung der Gehäuse 2 und 3 zueinander, wobei die Zahnräder 6, 7 und 8 in Eingriff bleiben.

Fig. 2 zeigt diese Situation. Von einer antreibenden Welle 1 ausgehend, deren Position hier ortsfest angenommen wurde, kann sich die abtreibende Welle 5 in die Position 5' oder 5" bewegen. Jede

Zwischenstellung etwa auf der Geraden 9 ist möglich, sodaß sich ein Übertragungsbereich H ergibt.

Die weiteren Bauteile der Vorrichtung wurden gemäß Fig. 1 bezeichnet und die Bezugszeichen in der oberen Endstellung mit einem Strich und in der unteren Endstellung mit zwei Strichen versehen.

Die Ausführung nach Fig. 1 und 2 ist beispielsweise für ein auf einem Schlitten verfahrbares rotierendes Werkzeug einer Werkzeugmaschine geeignet, dessen Antrieb ortsfest bzw. auf dem Bettschlitten angeordnet ist.

Fig. 3 zeigt eine Alternative zur Erfindung, bei welcher drei Schwingen 10, 11, 12 gelenkig aneinanderschließen und mit ineinandergreifenden Zahnrädern bestückt sind. Von einer antreibenden Welle 13 ausgehend können die Wellenpositionen 14, 14' (als Mittelstellung) bis 14'' erreicht werden, wobei 14 und 14'' die Grenzpositionen sind. Um ein unkontrolliertes Ausbrechen der Schwingen bei ortsfest feststehenden Wellen 13 und 14 in eine zweite stabile Position der durch die Schwingen gegebenen Kettenlinie zu vermeiden, sind auf den Schwingen 10 und 11 jeweils Anschläge 15, 16 vorgesehen, die einen Übergang über die Strecklage hinaus verhindern.

Wenn hier von Schwingen 10, 11, 12 die Rede ist, dann sind damit jene starren Verbindungselemente zwischen jeweils zwei oder mehreren Achsen von Zahnrädern gemeint, die in der Praxis durch U-förmig die Zahnräder übergreifende Bügel oder durch komplette Gehäuseelemente, wie dies in Fig. 1 dargestellt ist, realisiert sein können.

Fig. 4 zeigt eine um die Antreibswelle 17 drehbaren Schwinge 18 mit drei kämmenden Zahnrädern, wobei an der Achse 19 des Zahnrades 20 eine weitere Schwinge 21 mit drei Zahnrädern anschließt. Das letzte der Zahnräder sitzt auf der abtreibenden Welle 22, die in der Höhe bzw. in ihrem relativen Abstand (Achsabstand) zur Welle 17 veränderbar ist. Wesentlich bei diesem Ausführungsbeispiel ist, daß auf jeder Schwinge mehr als zwei Zahnräder gelagert sind, wodurch die "Reichweite" der Übertragungsvorrichtung größer wird als in Fig. 3. Eine Zwischenposition der Welle 22 ist mit 22' und die untere Grenzstellung des Übertragungsbereiches mit 22'' bezeichnet.

Die Übertragung des Drehmomentes von der antreibenden Welle 17 auf die abtreibende Welle 22 erfolgt ohne Winkelfehler und mit gutem Wirkungsgrad. Es können hohe Drehmomente übertragen werden.

**Patentansprüche**

1. Vorrichtung zur kontinuierlichen Übertragung von Drehmomenten zwischen zwei Wellen von zwei relativ zueinander bewegbaren Maschinenteilen, beispielsweise zwischen einer antreibenden und einer abtreibenden Welle, die auf zwei verschiedenen, relativ gegeneinander verfahrbaren Schlitten einer Werkzeugmaschine, wie auf dem Bettschlitten einerseits und auf dem Planschlitten anderseits, gelagert sind, dadurch gekennzeichnet, daß mindestens zwei an sich bekannte Schwingen (2, 3; 10, 11, 12; 18, 21) vorgesehen sind, die, wie bekannt, mittels mindestens einer Achse (4, 19) frei drehbar miteinander verbunden sind, daß auf der Achse (4, 19) ein Stirnrad (7, 20) sitzt, das in ein weiteres auf jeder Schwinge (2, 3; 10, 11, 12; 18, 21) und bezüglich dieser frei drehbar gelagertes Stirnrad (6, 8), an das gegebenenfalls weitere Stirnräder anschließen, eingreift, und daß das eine jener beiden Stirnräder (6, 8), die von der gelenkigen Verbindung der Schwingen (2, 3) am entferntesten liegen, mit der antreibenden (1, 13, 17) und das andere mit der abtreibenden Welle (5, 14, 22; 5', 14', 22'; 5'', 14'', 22'') jeweils eines der zueinander bewegbaren Maschinenteile verbindbar ist.

2. Vorrichtung nach Anspruch 1, dadurch gekennzeichnet, daß die Schwingen (2, 3; 10, 11, 12; 18, 21) als Zahnradgehäuse ausgebildet sind, die gelenkig und gegebenenfalls öldicht aneinanderschließen. (Fig. 1)

3. Vorrichtung nach Anspruch 2, dadurch gekennzeichnet, daß die Zahnradgehäuse (2, 3) unmittelbar auf der antreibenden bzw. der abtreibenden Welle (1, 5) drehbar gelagert sind.

4. Vorrichtung nach Anspruch 1, dadurch gekennzeichnet, daß die Zahnradgehäuse (2, 3) konzentrisch zur antreibenden bzw. abtreibenden Welle (1, 5) gelagert sind.

*Fig.1*

*Fig. 2*

Fig.3

Fig.4

0270521